# EUROPEAN PATENT APPLICATION

(11) **EP 3 822 116 A1**
(43) Date of publication of application: **19.05.2021**
(21) Application number: 19833776.8
(22) Date of filing: 14.07.2019
(51) Int. Cl.: B60N 2/28

(54) **CHILD SAFETY SEAT WITH HEAT DISSIPATION FUNCTION**

(30) Priority: 13.07.2018 CN 201821115583 U
(71) Applicant: Ningbo Baby First Baby Products Co., Ltd., Yuyao, Zhejiang 315412 (CN)
(72) Inventor: CAO, Wenyong, Yuyao Zhejiang 315412 (CN); CHENG, Fei, Yuyao Zhejiang 315412 (CN)
(74) Representative: Ipside
(86) International application number: PCT/CN2019/095914
(87) International publication number: WO 2020/011270

(57) **Abstract**

A child safety seat with a heat dissipation function, comprising a system control panel (40), and an environment detection device (50), an air supply device (60), and a sit-in detection device (70) which are separately in communication connection with the system control panel, wherein the sit-in detection device can detect whether a human body takes a seat, the environment detection device can detect the current temperature and humidity of the environment near the back of an occupant and send a control signal containing temperature and humidity information to the system control panel, and after receiving a working instruction, from the sit-in detection device, representing that a human body takes a seat, the system control panel starts processing of the control signal and switches an on/off state of the air supply device according to the control signal; and wherein the air supply device is arranged on both sides of a seat back. The child safety seat with a heat dissipation function has a simple structure, provides the heat dissipation function without affecting the structural strength of the seat itself, solves the problem of blocked air supply, and provides a better heat dissipation effect.

## Description

### Technical Field

The present invention relates to the field of child safety seats, and in particular to a child safety seat with a heat dissipation function.

### Background Art

At present, parents are paying more and more attention to child safety seats. In addition to the function of basic guarantee for the safety of children taking a vehicle, child safety seats have also been developed for improving the ride comfort of children. In a hot weather environment, the temperature inside a vehicle is often higher than the outside. If an air conditioner in the vehicle is turned on for cooling, it is easy to adversely affect the physical health of children with weakened immunity, and thus the parents usually do not choose to turn on the air conditioner in the vehicle. Children are prone to sweating when sitting in a child safety seat in a hot environment. Especially when a child is sleeping, the temperature of the back will rise significantly, and a lot of sweat will be released, which will adversely affect both the ride comfort and the physical health of the child.

In order to solve the above problem, a solution is proposed in the prior art. An air channel is provided inside a child safety seat, a fan is provided on one side of the air channel for air suction, an air inlet of the air channel is arranged at a seat back of the child safety seat, and the heat on the back of a child is removed by means of the fan. Although such technical solution can decrease the temperature of the back of the child to a certain extent, it also brings about some problems. Firstly, the air channel arranged inside the child safety seat decreases the overall structural strength of the seat and reduces the safety of the child safety seat, bringing about certain potential safety hazards; secondly, because the child's body usually leans against the back during riding, the air inlet arranged at the seat back is easily blocked by the child's body so as to block the air channel, affecting the heat dissipation effect; and finally, providing an air channel inside a child safety seat brings about great machining difficulty and increases the production cost.

### Summary of the Invention

One objective of the present invention is to provide a child safety seat with a heat dissipation function, which has a simple structure and provides the heat dissipation function without affecting the structural strength of the seat itself.

Another objective of the present invention is to provide a child safety seat with a heat dissipation function, which solves the problem of blocked air supply and ensures a heat dissipation effect.

Another objective of the present invention is to provide a child safety seat with a heat dissipation function, which enables a user to control an on/off state of an air supply device on the child safety seat in a wireless remote-control mode, which is convenient for the user to operate.

In order to achieve the above objectives, the present invention provides a child safety seat with a heat dissipation function, comprising:
a system control panel; and
an air supply device in communication connection with the system control panel, wherein the system control panel is adapted to receive a control signal and switches an on/off state of the air supply device according to the control signal, and the air supply device can effectively achieve the effect of ventilation and heat dissipation in a working state.

Preferably, the air supply device is arranged on both sides of a seat back of the child safety seat, such that an air outlet of the air supply device is not easily blocked by the child's body.

According to a preferred embodiment of the present invention, the child safety seat with a heat dissipation function further comprises an environment detection device in communication connection with the system control panel. After the child takes a seat, the environment detection device can detect the temperature and humidity of the environment around the child's back and send the control signal containing temperature and humidity information to the system control panel.

According to another preferred embodiment of the present invention, the child safety seat with a heat dissipation function further comprises a mobile terminal in communication connection with the system control panel. The mobile terminal is adapted to send the control signal to the system control panel to enable the user to control the on/off state of the air supply device in a wireless remote-control mode, which is convenient for the user to operate.

According to the preferred embodiment of the present invention, the child safety seat with a heat dissipation function further comprises a sit-in detection device in communication connection with the system control panel. The sit-in detection device is used to detect whether the child takes a seat. In a normal state, the sit-in detection device is in an off state; and after the sit-in detection device detects that a child takes a seat, the sit-in detection device sends a working instruction to the system control panel so as to control the system control panel to start processing of the control signal.

Preferably, the sit-in detection device is a pressure sensor, and the pressure sensor is mounted at a seat portion of the child safety seat.

According to a preferred embodiment of the present invention, the child safety seat with a heat dissipation function further comprises a power supply device. The power supply device supplies power to the system control panel, the air supply device, the environment detection device and the sit-in detection device.

Preferably, the power supply device is a battery.

According to the preferred embodiment of the present invention, the child safety seat with a heat dissipation function further comprises at least one wiring terminal. The wiring terminal is separately electrically connected to the system control panel, the air supply device, the environment detection device, and the sit-in detection device. The wiring terminal is adapted to be connected to an external power source so as to supply power to a power device of the child safety seat by means of the external power source.

The above and other objectives, features, and advantages of the present invention will be further clarified with reference to the following detailed description, the accompanying drawings and the appended claims.

### Brief Description of the Drawings

Fig. 1 is an exploded view according to a first preferred embodiment of the present invention.
Fig. 2 is a front view according to the first preferred embodiment of the present invention.
Fig. 3 is a side view according to the first preferred embodiment of the present invention.
Fig. 4 is a schematic configuration diagram according to a second preferred embodiment of the present invention.

In the figures: headrest 10; seat body 20; seat back 21; seat portion 22; base 30; battery compartment 31; wiring terminal 32; system control panel 40; environment detection device 50; air supply device 60; sit-in detection device 70; system control panel 40A; mobile terminal 50A; air supply device 60A; and sit-in detection device 70A.

### Detailed Description of Embodiments

Hereinafter, the invention will be further described in conjunction with the accompanying drawings and the specific embodiments, and it should be noted that, on the premise of no conflict, the embodiments or the technical features described below could be com compartmented arbitrarily to form a new embodiment.

The following description is used to disclose the present invention such that those skilled in the art could realize the present invention. The preferred embodiments in the following description are only examples, and those skilled in the art could have conceived of other obvious modifications. The basic principle of the present invention defined in the following description can be applied to other implementation solutions, modification solutions, improvement solutions, equivalent solutions, and other technical solutions without departing from the spirit and scope of the present invention.

Those skilled in the art should understand that in the disclosure of the present invention, the orientational or positional relationships indicated by the terms "longitudinal", "transverse", "upper", "lower", "front", "rear", "left", "right", "vertical", "horizontal", "top", "bottom", "inner", "outer", etc. are on the basis of the orientational or positional relationships shown in the accompanying drawings, and are only for facilitating the description of the present invention and simplifying the description, rather than indicating or implying that the device or element referred to must have a particular orientation or be constructed and operated in a particular orientation, and therefore the above terms will not be interpreted as limiting the present invention.

It can be understood that the term "one" should be interpreted as "at least one" or "one or more", that is, the number of an element may be one in one embodiment, while the number of the element may be more than one in another embodiment, and the term "one" cannot be interpreted as limiting the number.

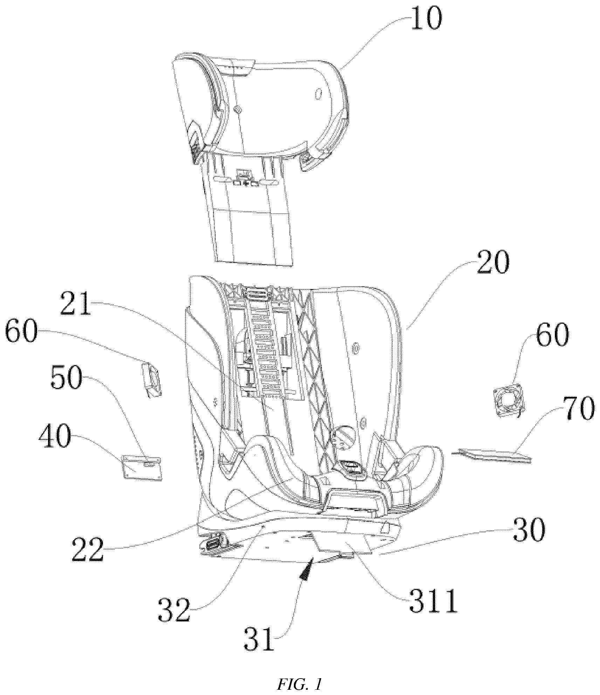

With reference to Figs. 1-3, a child safety seat with a heat dissipation function according to a first preferred embodiment of the present invention will be illustrated in the following description, the child safety seat comprising a headrest 10, a seat body 20, a base 30, a system control panel 40, a power supply device (not shown in the figures), an environment detection device 50, an air supply device 60, and a sit-in detection device 70. The headrest 10 and the base 30 are separately connected to the seat body 20.

The environment detection device 50, the air supply device 60 and the sit-in detection device 70 are separately in communication connection with the system control panel 40, and the power supply device supplies electric energy to the system control panel 40, the environment detection device 50, the air supply device 60 and the sit-in detection device 70. The air supply device 60 can blow air to the inner side of the seat body 20 to accelerate the flow of air in the inner side environment of the seat body 20 to achieve the effect of heat dissipation and ventilation. The system control panel 40 is adapted to receive a control signal and switch an on/off state of the air supply device 60 according to the control signal.

When an occupant sits on the seat body 20, the environment detection device 50 can detect the current temperature and humidity of the environment near the back of the occupant and send a control signal containing current temperature and humidity information to the system control panel 40. The system control panel 40 compares the current temperature and humidity near the back of the occupant with preset thresholds according to the control signal and switches the on/off state of the air supply device 60 according to the comparison result. If the current temperature and humidity are higher than the preset thresholds, the air supply device 60 is turned on to blow air; and if the current temperature and humidity are lower than the preset thresholds, the air supply device 60 is turned off.

Those skilled in the art would have readily understood that the environment detection device 50 may be but not limited to one or a combination of a temperature sensor, a humidity sensor and a temperature/humidity sensor.

Further, the seat body 20 comprises a seat back 21 and a seat portion 22. The temperature and humidity of the environment near the back of the occupant's body reflect whether the occupant's body is currently in a hot and sweaty state. In order to be able to detect the temperature and humidity of the environment near the back of the occupant accurately and in time, in this embodiment, the environment detection device 50 is preferably implemented as the temperature/humidity sensor.

A surface of the seat back 21 is provided with an opening. The configuration position of the opening matches the position where the back of the occupant after taking the seat fits to the seat back 21 and can be appropriately adjusted on different types of child safety seats. The temperature/humidity sensor is arranged in the opening of the seat back 21. After the occupant takes a seat, the heat and moisture released from the occupant's body can be rapidly and accurately detected by the temperature/humidity sensor through the opening. In other possible preferred embodiments, the environment detection device 50 may also be arranged on an inner wall of the seat body 20 to detect a temperature of the back of the occupant by means of heat conduction of the seat body 20.

Preferably, in this embodiment, the opening is arranged in the middle of the seat back.

Preferably, in this preferred embodiment, two air supply devices 60 are provided, and are respectively arranged on two sides of the seat back 21 and face the inner side of the seat body 20, such that an air outlet of the air supply device 60 is not easily blocked by the occupant's body to guarantee the effect of heat dissipation and ventilation.

Preferably, the air supply device 60 is a fan.

Compared with the design of providing an air channel inside a seat body in the prior art, the child safety seat with a heat dissipation function of the present invention has a simple structure, provides the heat dissipation function without affecting the structural strength of the seat itself, and avoids the adverse effect on the structural strength of the seat.

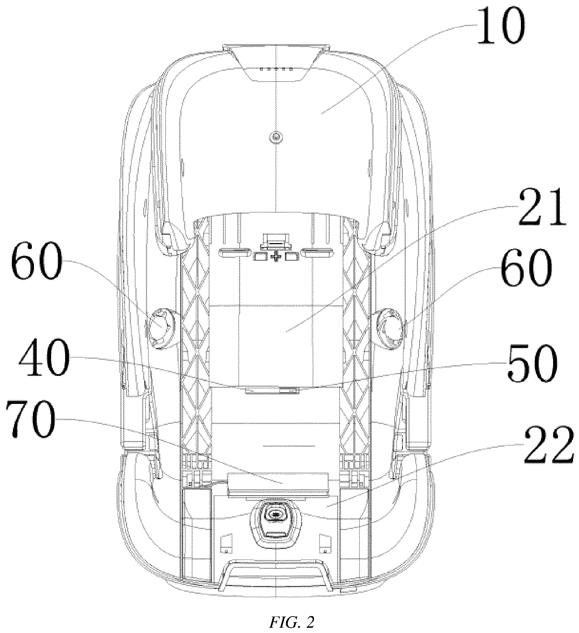

It is worth mentioning that the number of the air supply device 60 is not limited in the child safety seat with a heat dissipation function of the present invention. For example, in specific examples shown in Figs. 1 and 2, the content and features of the child safety seat with a heat dissipation function of the present invention are illustrated and disclosed taking the case where the number of the air supply device 60 is two as an example. However, the number of the air supply device 60 being two cannot be considered as limiting the content and the scope of the child safety seat with a heat dissipation function of the present invention. Optionally, in other possible examples of the child safety seat with a heat dissipation function of the present invention, the number of the air supply device 60 may also be implemented as but not limited to 3, 4, 5, etc.

Further, the sit-in detection device 70 is used to detect whether the child takes a seat. In a normal state, the sit-in detection device 70 is in an off state; and after the sit-in detection device 70 detects that the child takes a seat, the sit-in detection device 70 sends a working instruction to the system control panel 40 so as to control the system control panel 40 to start processing of the control signal.

Those skilled in the art would have readily understood that the sit-in detection device 70 can be selected from various devices, and exemplarily, the sit-in detection device 70 may be but not limited to a pressure sensor, an infrared switch, a human body induction switch, a microwave switch, or any other devices having a function of determining that a human body sits in a child safety seat.

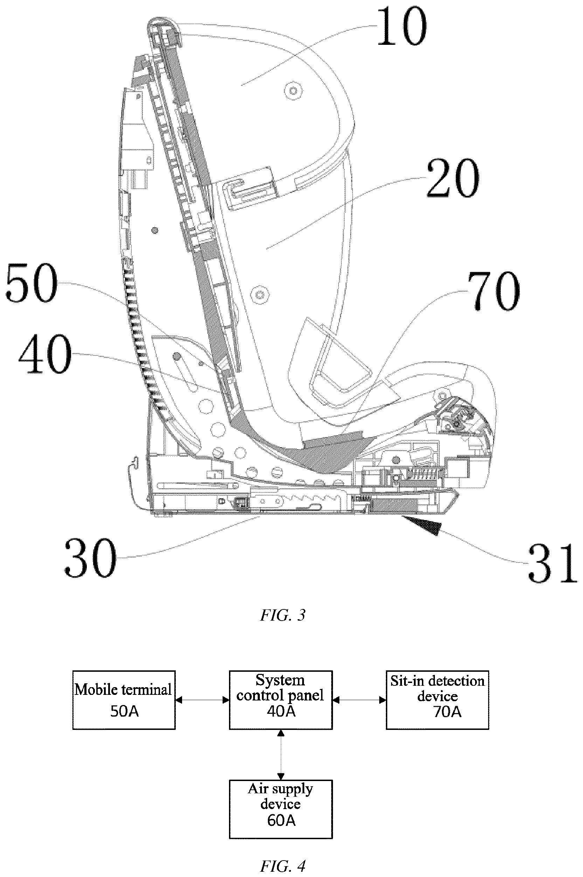

Preferably, in this embodiment, the sit-in detection device 70 is a pressure sensor. As shown in Figs. 2 and 3, the pressure sensor is mounted at the seat portion 22 of the seat body 20. In a normal state, the pressure sensor is in an off state; and when the pressure sensor detects pressure, that is, an occupant sits in the seat portion 22, the pressure sensor is activated and sends, to the system control panel 40, a working instruction representing that the child has taken a seat, and the system control panel 40 receives the working instruction and then starts processing of the control signal from the environment detection device 50.

That is, only after the occupant takes the seat, the system control panel 40 will process and analyze the control signal from the environment detection device 50 and automatically switch the on/off state of the air supply device 60 according to the analysis result, so as to avoid the waste of electric energy generated by the operation of the air supply device 60 when no one takes the seat.

With the above design, the system control panel 40 automatically switches the on-off state of the air supply device 60 according to the control signal of the environment detection device 50, and automatically determines whether the current temperature and humidity of the environment near the back of the occupant meet the condition of turning on the air supply device 60 to perform heat dissipation. On the one hand, it omits the cumbersome and inconvenient manual operation and brings about the convenience in use for children with insufficient behavior handling capacity; and on the other hand, it prevents the adverse effect on the physical health of children that may be caused by keeping blowing when the child does not feel hot or sweaty, and avoids the waste of electric energy generated by keeping blowing in the case where no one takes the seat.

Those skilled in the art would have readily understood that the respective communication mode of the environment detection device 50, the air supply device 60 and the sit-in detection device 70 with the system control panel 40 may be a wireless communication mode, a wired communication mode via an electrical wire, or any other modes that can realize the respective communication of the environment detection device 50, the air supply device 60 and the sit-in detection device 70 with the system control panel 40. For example, the environment detection device 50, the air supply device 60, and the sit-in detection device 70 separately communicate with the system control panel 40 in a wireless communication mode that may be, but not limited to, Bluetooth, NFC, WiFi, LoRa, NB-loT, etc.

Those skilled in the art would also have readily understood that the mounting position of the system control panel 40 is not limited in the child safety seat with a heat dissipation function of the present invention.

Further, the base 30 is provided with a battery compartment 31 for mounting the power supply device. The power supply device is generally a common element for power supply, for example, but not limited to, an alkaline battery, a rechargeable battery, etc. Preferably, the battery compartment 31 comprises a detachable battery cover 311 to facilitate the user to replace the battery. Those skilled in the art would have readily understood that the mounting position of the power supply device is not limited in the child safety seat with a heat dissipation function of the present invention.

Preferably, the child safety seat with a heat dissipation function further comprises at least one wiring terminal 32. The wiring terminal 32 is arranged at a side of the base 30. The wiring terminal 32 is separately electrically connected to the system control panel 40, the air supply device 60, the environment detection device 50 and the sit-in detection device 70. The wiring terminal 32 can be electrically connected to an external power source. For example, the wiring terminal 32 can be electrically connected to a vehicle-mounted power source, such that the vehicle-mounted power source supplies electric energy to the system control panel 40, the air supply device 60, the environment detection device 50 and the sit-in detection device 70 by means of the wiring terminal 32. Those skilled in the art would have readily understood that the mounting position of the wiring terminal 32 is not limited in the child safety seat with a heat dissipation function of the present invention.

Fig. 4 shows a schematic configuration diagram according to a second preferred embodiment of the present invention. In this embodiment, the child safety seat with a heat dissipation function comprises a system control panel 40A, and a sit-in detection device 70A, an air supply device 60A and a mobile terminal 50A which are separately in communication connection with the system control panel. The system control panel 40A is adapted to receive a control signal and switch the on/off state of the air supply device 60A according to the control signal.

This embodiment is based on the first preferred embodiment described above but is different from the first preferred embodiment described above in that in this embodiment, the control signal received by the system control panel 40A is from the mobile terminal 50A. The mobile terminal 50A is adapted to send, to the system control panel 40A, a control signal for controlling the on and off of the air supply device 60A. The system control panel 40A switches the on/off state of the air supply device 60A according to the control signal. If the control signal is a turn-on signal, the air supply device 60A is turned on to blow air; and if the control signal is a turn-off signal, the air supply device 60A is turned off.

Those skilled in the art would have readily understood that the mobile terminal 50A may be a software client-side pre-installed on a user's portable electronic apparatus and may also be a remote-control device paired with the system control panel 40A.

It is worth mentioning that the communication mode between the mobile terminal 50A and the system control panel 40A may be any communication mode that realizes communication between the mobile terminal 50A and the system control panel 40A. For example, the mobile terminal 50A communicates with the system control panel 40A in a wireless communication mode that may be, but not limited to, Bluetooth, Hot Point, NFC, WiFi, LoRa, NB-loT, GSM, 3G mobile communication network, 4G mobile communication network, 5G mobile communication network, etc. Alternatively, the mobile terminal 50A may also communicate with the system control panel 40A through a preset user-defined communication data protocol.

Through the control of the mobile terminal 50A, the user can control the on/off state of the air supply device 60A on the child safety seat in a wireless remote-control mode, which is convenient for the user to operate. In general, the child safety seat is mounted on a rear seat of a vehicle; even if the user sits on a front seat of the vehicle or another position far away from the child safety seat, the user can wirelessly and remotely control the on-off state of the air supply device 60A by means of the mobile terminal 50A; and the convenience of wireless remote-control is particularly obvious in a vehicle with a narrow space.

Those skilled in the art should understand that the embodiments of the present invention shown in the above description and the accompanying drawings are only examples and do not limit the present invention. The objectives of the present invention are completely and effectively achieved. The functions and structural principles of the present invention have been illustrated and explained in the embodiments, and the embodiments of the present invention can have any modification or alteration without departing from the principles.

## Claims

1. A child safety seat with a heat dissipation function, **characterized by** comprising:
a seat body comprising a seat back;
a system control panel; and
an air supply device in communication connection with the system control panel, wherein the system control panel is adapted to receive a control signal and switch an on/off state of the air supply device according to the control signal, and the air supply device is arranged on both sides of the seat back.

2. The child safety seat with a heat dissipation function according to claim 1, **characterized by** further comprising an environment detection device in communication connection with the system control panel, wherein the environment detection device detects the temperature and humidity near the seat back and sends a control signal containing a detection result to the system control panel.

3. The child safety seat with a heat dissipation function according to claim 1, **characterized by** further comprising a mobile terminal in communication connection with the system control panel, wherein the mobile terminal is adapted to send the control signal to the system control panel.

4. The child safety seat with a heat dissipation function according to any one of claims 1-3, **characterized by** further comprising a sit-in detection device in communication connection with the system control panel, wherein the sit-in detection device is used to detect whether an occupant takes a seat, and after the sit-in detection device detects that an occupant takes a seat, the sit-in detection device sends a working instruction to the system control panel so as to control the system control panel to start processing of the control signal.

5. The child safety seat with a heat dissipation function according to claim 4, **characterized in that** the sit-in detection device is a pressure sensor.

6. The child safety seat with a heat dissipation function according to claim 4, **characterized by** further comprising a power supply device, wherein the power supply device supplies power to the system control panel, the air supply device, the environment detection device, and the sit-in detection device.

7. The child safety seat with a heat dissipation function according to claim 6, **characterized in that** the power supply device is a battery.

8. The child safety seat with a heat dissipation function according to claim 6, **characterized by** further comprising at least one wiring terminal, wherein the wiring terminal is electrically connected to the system control panel, the air supply device, the environment detection device and the sit-in detection device; and the wiring terminal is adapted to be connected to an external power source.

9. The child safety seat with a heat dissipation function according to claim 2, **characterized in that** the middle of the seat back is provided with an opening in which the environment detection device is arranged.

10. The child safety seat with a heat dissipation function according to claim 2 or 9, **characterized in that** the environment detection device is one or a combination of a temperature sensor, a humidity sensor and a temperature/humidity sensor.
